(19) **Europäisches Patentamt European Patent Office Office européen des brevets**

(11) **EP 3 638 392 B1**

(12) **EUROPEAN PATENT SPECIFICATION**

(45) Date of publication and mention of the grant of the patent:
**26.07.2023 Bulletin 2023/30**

(21) Application number: **18732731.7**

(22) Date of filing: **15.06.2018**

(51) International Patent Classification (IPC):
*B01D 15/16* (2006.01)      *G01N 30/34* (2006.01)
*G01N 30/86* (2006.01)

(52) Cooperative Patent Classification (CPC):
**B01D 15/16; B01D 15/166; G01N 30/34; G01N 30/8658**

(86) International application number:
**PCT/EP2018/066005**

(87) International publication number:
**WO 2018/229271 (20.12.2018 Gazette 2018/51)**

(54) **METHOD AND APPARATUS FOR DETERMINING ONE OR MORE BUFFER COMPOSITION RECIPES**

VERFAHREN UND VORRICHTUNG ZUR BESTIMMUNG EINER ODER MEHRERER PUFFERZUSAMMENSETZUNGSREZEPTE

PROCÉDÉ ET APPAREIL POUR DÉTERMINER UNE OU PLUSIEURS RECETTES DE COMPOSITION TAMPON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2017 GB 201709531**

(43) Date of publication of application:
**22.04.2020 Bulletin 2020/17**

(73) Proprietor: **Cytiva Sweden AB**
**751 84 Uppsala (SE)**

(72) Inventor: **CARREDANO, Enrique, Napoleon**
**751 84 Uppsala (SE)**

(74) Representative: **Bedford, Grant Richard**
**Global Life Sciences Solutions Operations UK Ltd**
**Amersham Place**
**Little Chalfont, Buckinghamshire HP7 9NA (GB)**

(56) References cited:
WO-A1-2011/037530      WO-A1-2016/075207
WO-A1-2016/118707      US-A1- 2016 367 911

## Description

### TECHNICAL FIELD

The present invention relates to an apparatus and a method for determining one or more buffer composition recipes. In particular, buffer composition recipes for a chromatography apparatus configured for performing chromatography.

### BACKGROUND

Chromatography is a well-known procedure for analyzing and preparing chemical mixtures or chemical samples. The sample may typically be dissolved in a fluid, referred to as a buffer composition. The various sample components of the mixture travel at different speeds, causing them to separate. This separation may be used to separate the sample components in a fractionation step where the mobile phase may be directed to different containers, e.g. by an outlet valve of the chromatography apparatus.

The selection of the buffer composition used will greatly influence the quality of the output from the chromatography process, e.g. a purity and/or yield of a wanted sample component. In particular, the potential of hydrogen, pH, value and conductivity of the buffer is of importance.

In some existing preparation or production systems for buffer compositions, buffer components are mixed into a buffer composition according to a recipe or molar recipe, thereby obtaining a buffer composition having a wanted pH or conductivity. A drawback of such systems is that if the recipe is not known, a substantial effort must be made by means of testing, to determine buffer composition recipes or to find out the fractions of buffer components in a recipe resulting in a buffer composition having a wanted pH or conductivity. This means that large amounts of resources are wasted, in the form of man-hours and wasted buffer components.

Further, some existing commercial software systems may be able to determine buffer composition recipes. A drawback with such systems is that their accuracy is compromised when salts, additives and multiple buffers are used at different concentrations. To the extent that such systems may consider such effects, their accuracy is acceptable only for a relatively small number of combinations of buffer composition components and buffer composition concentrations.

WO 2016/075207 A1 discloses a method for determining the influence of least a first and a second experimental parameter on a liquid chromatography protocol for purifying one or more target molecules from a sample. The experimental parameters can be a buffer system. Using a statistical design of experiments is preferred for determining the different experimental conditions at which the chromatography purifications of the sample are performed.

WO 2011/037530 A1 discloses a method for preparing a liquid flow having pre-defined characteristics by mixing liquid flows of at least two different component stock solutions with each other, comprising the steps of determining a selected property value for one or more of the stock solutions by sensing, in a flow of each stock solution separately, at least one characteristic related to the property value for the stock solution, and based on the determined property value or values, mixing the stock solution flows in mixing ratios giving the desired mixed liquid flow.

Thus, there is a need for an improved apparatus, in particular in laboratory scale, and a method for determining one or more buffer compositions and corresponding buffer composition recipes for performing chromatography.

### OBJECTS OF THE INVENTION

An objective of embodiments of the present invention is to provide a solution which mitigates or solves the drawbacks and problems described above.

### SUMMARY OF THE INVENTION

The above and further objectives are achieved by the subject matter described herein. Further advantageous implementation forms of the invention are further defined herein According to a first aspect of the invention, the above mentioned and other objectives are achieved with a method for determining one or more buffer composition recipes for a chromatography apparatus configured for performing chromatography. The method comprising obtaining design of experiment, DoE, data, wherein the DoE data is indicative of a set of buffer compositions and corresponding unique recipes, where the set of buffer compositions is selected as a subset from a total set of buffer compositions within a design range, running a first set of experiments by consecutively providing buffer compositions mixed according to each unique recipe indicated by the DoE data as the only input to the chromatography apparatus, obtaining results of experiment, RoE, data as output from the chromatography apparatus, wherein the RoE data is indicative of at least a potential of hydrogen, pH, value and a conductivity value of each buffer composition of the set of buffer compositions, obtaining prediction of experimental, PoE data, wherein the PoE data is indicative of at least a predicted pH value and a predicted conductivity value of each buffer composition of the total set of buffer compositions, obtaining a first objective function, the first objective function being dependent on a pH value and a conductivity value, selecting a second subset from the total set of buffer compositions which corresponding pH values and conductivity values optimize the first objective function, determining the one or more buffer composition recipes for chromatography of a chemical sample as the unique recipes corresponding to the second subset from the total set of buffer compositions.

At least an advantage of the invention according to the first aspect is that a buffer composition/s or buffer composition/s recipe/s is/are obtained in reduced time and with reduced complexity by obtaining the a buffer composition through automated experiments. A further advantage is that the amount of wasted buffer components may be reduced by using the method according to the invention.

In a first embodiment according to the first aspect, each unique recipe 100 indicated by the DoE data 210 is at least indicative of a first fraction 111 of a first fluid 110, a second fraction 121 of a second fluid 120 and a third fraction 131 of a third fluid 130.

At least an advantage of the invention according to the first embodiment is that an improved buffer composition/s or buffer composition/s recipe/s suitable for protein chromatography is/are obtained. The control over so-called Critical Process Parameters like pH, conductivity, buffer concentration of the moving phase in chromatographical setup, are crucial to ensure not only the effectiveness of the production but also the purity profile and thereby the function or effectiveness of the product itself.

In a second embodiment according to the first aspect, the method further comprises running a second set of experiments by further consecutively providing the subset of buffer compositions and the chemical sample as input to the chromatography device, obtaining second results of experiment, RoE, data as output from the chromatography device, wherein the second RoE data is indicative of at least a purity and/or a yield of a wanted substance comprised in the sample, obtaining a second objective function, the second objective function being dependent on the purity and/or the yield, selecting a third subset from the subset, which third subset optimizes the second objective function, and determining the one or more buffer composition recipes for chromatography of a chemical sample as the unique recipes of the third subset.

At least an advantage of this embodiment is that an improved purity and/or yield of a wanted substance is obtained by optimising the buffer composition to be used for chromatography.

In a third embodiment according to the first aspect, the method further comprises performing chromatography of the chemical sample using at least one buffer composition mixed according to the one or more determined buffer composition recipes.

At least an advantage of the invention according to the second embodiment is that an improved purity and/or yield of a wanted substance is obtained by using the optimised buffer composition in the chromatography process. A further advantage is that the quality of the output from the chromatography process is improved by using a buffer composition selected according to the present invention.

According to a second aspect of the invention, the above mentioned and other objectives are achieved with a chromatography apparatus configured for performing chromatography, the chromatography apparatus comprising a plurality of inlets, each inlet coupled to a reservoir and each reservoir configured to hold a fluid, an injection unit coupled to the plurality of inlets and configured to provide a mix of fluids comprised in the plurality of reservoirs as a buffer composition in response to a first control signal, a pH sensor coupled to the injection unit and configured for measuring the pH value of the provided buffer composition, a conductivity sensor coupled to the injection unit and configured for measuring the conductivity of the provided buffer composition, a control unit comprising circuitry comprising a processor, and a memory, said memory containing instructions executable by said processor, whereby said chromatography apparatus is operative to perform the method according to the first aspect.

The advantages of the second aspect are the same as for the first aspect.

Also disclosed is a computer program comprising computer-executable instructions for causing a chromatography apparatus, when the computer-executable instructions are executed on a processing unit comprised in the chromatography apparatus, to perform any of the method steps according to the first aspect.

Furthermore is disclosed a computer program product comprising a computer-readable storage medium, the computer-readable storage medium having the computer program according to the third aspect embodied therein.

Further applications and advantages of embodiments of the invention will be apparent from the following detailed description.

## BRIEF DESCRIPTION OF THE DRAWINGS

Fig. 1 shows a buffer composition mixed using a recipe according to one or more embodiments of the present disclosure.

Fig. 2 schematically illustrates design of experiment, DoE, data, results of experiment, RoE, data and prediction of experimental, PoE, data according to one or more embodiments of the present disclosure.

Fig. 3 schematically illustrates an experiment according to one or more embodiments of the present disclosure.

Fig. 4 shows a chromatography apparatus according to one or more embodiments of the present disclosure.

Fig. 5 shows a control unit according to one or more embodiments of the disclosure.

Fig. 6 shows a flowchart of a method according to one or more embodiments of the present disclosure.

Fig. 7 shows details of a flowchart of a method according to one or more embodiments of the present disclosure.

Fig. 8 illustrates how the RoE data 220 may be predicted by the chromatography apparatus 400 according to one or more embodiments of the invention.

Fig. 9 schematically illustrates an objective function dependent on one or more variables according to one or more embodiments of the present invention.

Fig. 10 illustrates an objective function comprising a first pair of objective functions according to one or more embodiments of the present invention.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

## DETAILED DESCRIPTION

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

The expression "design range of buffer compositions" is to be interpreted in this disclosure as one or more ranges defining the variable space over which an experiment is conducted on the chromatography apparatus. In other words, this may comprise ranges defining boundaries within fractions of fluid mixed to a buffer composition is varied. In one example, this may define how fractions of fluid, such as acid, base, salt and water, are varied during an experiment.

In the present disclosure reference will be made interchangeably to container or reservoir, signifying a receptacle suitable for holding fluid. In the present disclosure reference will be made interchangeably to processor and processing means.

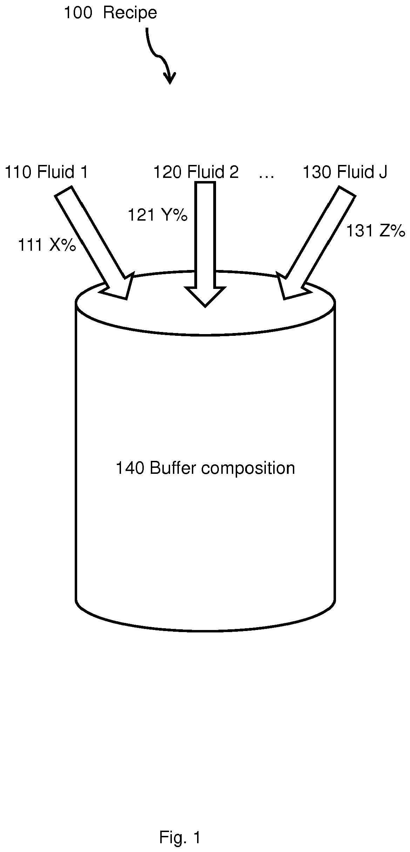

Fig. 1 shows a buffer composition 140 mixed using a recipe 100 according to one or more embodiments of the present disclosure. A recipe 100 of a buffer composition may comprise identity of a plurality of fluids or buffer components 110, 120, 130 and their respective fractions or parts or relative amounts 111, 121, 131 mixed into the buffer composition 140. The recipe 100 may be represented by a data structure or a hardware copy, such as a printout. The recipe 100 may be indicative of an identity of a buffer composition 140, a plurality of fluids or buffer components 110, 120, 130 and their respective fractions or parts or relative amounts 111, 121, 131 when mixed into the buffer composition 140. The recipe is typically used to produce a buffer composition 140 by mixing the buffer components 110, 120, 130 using the respective fractions or parts or relative amounts 111, 121, 131. Recipes that are represented in a set of recipes, e.g. represented in design of experiment, DoE, data 210, where each recipe has a unique combination of fractions or parts or relative amounts 111, 121, 131 is from here on referred to as unique recipes. In other words, in a set of unique recipes no two recipes have the same fractions or parts or relative amounts 111, 121, 131.

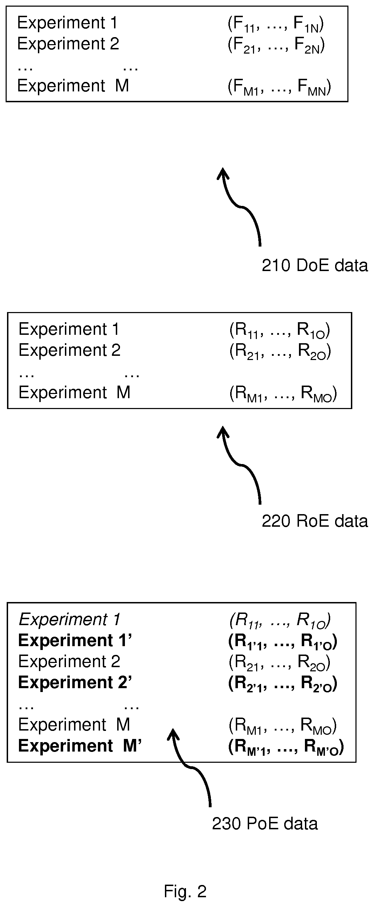

Fig. 2 schematically illustrates design of experiment, DoE, data 210, results of experiment, RoE, data 220 and prediction of experimental, PoE, data 230 according to one or more embodiments of the present disclosure. The DoE data 210 comprises input factors ($F_{11}$-$F_{MN}$) that are used when running an experiment (experiment 1 - experiment M). DoE data typically comprises a subset of buffer compositions selected from a total set of buffer compositions within a design range. Each row or alternatively each column may represent the input factors of an experiment. Any number of experiments M and any number of input factors N may be defined. In an embodiment, the DoE data 210 is indicative of a set of buffer compositions and corresponding unique recipes 100.

In one example, a unique recipe 100 comprises a line of the factors, comprised in the in the DoE data ($F_{11}$-$F_{1N}$). The recipe comprises fractions 111, 121, 131 of a first fluid 110, a second fluid 120 and a third fluid 130 to be mixed into a buffer composition 140 and provided to a chromatography apparatus 400, e.g. fractions of an acid, a base and water in the example. The RoE data 220 comprises the responses or results ($R_{11}$-$R_{MO}$) of each experiment, e.g. obtained by performing measurements using sensors or analytical equipment known in the art on an output fluid from the chromatography apparatus 400. In one example, an experiment using factors $F_{11}$-$F_{1N}$ will output the corresponding responses or results $R_{11}$-$R_{1O}$.

The PoE data 230 comprises predicted responses or results. The PoE data 230 typically expands the RoE data 220 to include further results, points or values within the design range. In fig. 2, this is illustrated by additional experiments, denoted "Experiment 1'" and "Experiment 2'", predicted and added to the RoE data. In one or more embodiments the DoE data and/or the PoE data and/or the RoE data may be implemented as a data structure, such as a table. In one embodiment, the unique recipes 100 indicated by the DoE data 210 comprises constant first fractions 111 of acid and varying second fractions 121 of base. In one example, the varying second fractions 121 of base are varied according to a second gradient.

In one embodiment, the unique recipes 100 indicated by the DoE data 210 comprise varying first fractions 111 of acid and constant second fractions 121 of base. In one example, the varying first fractions 111 of acid are varied according to a first gradient.

In one embodiment, the unique recipes 100 indicated by the DoE data 210 comprise constant first fractions 111 of acid and varying second fractions 121 of base and varying fourth fractions of salt solution. In one example, the varying second fractions 121 of base are varied according to a second gradient and the fourth fractions of salt solution are varied according to a fourth gradient.

In one embodiment, the unique recipes 100 indicated by the DoE data 210 comprise varying first fractions 111 of acid and constant second fractions 121 of base and varying fourth fractions of salt solution. In one example, the varying the first fractions 111 of acid are varied according to a first gradient and the fourth fractions of salt solution are varied according to a fourth gradient.

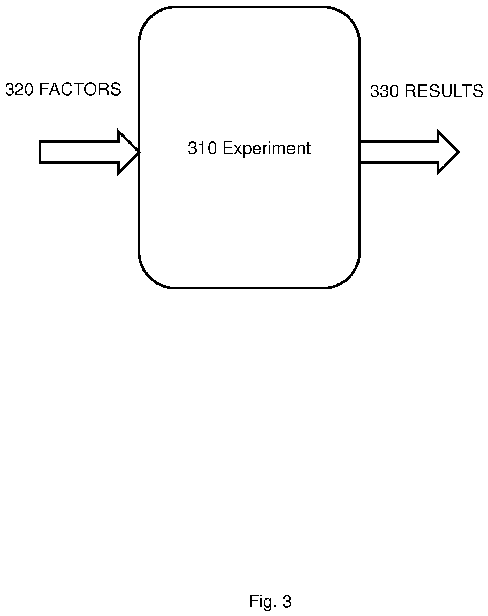

Fig. 3 schematically illustrates an experiment 310 according to one or more embodiments of the present disclosure. A number of factors 320 are defined for the experiment 310, e.g. as DoE data 210. After running the experiment the resulting measurements are aggregated in the results or responses 330, e.g. as RoE data 220.

In an example, the factors 320 are fractions 111, 121, 131 of a first fluid 110, a second fluid 120 and a third fluid 130, i.e. buffer components. E.g. X% of fluid 1, Y% of fluid 2 and Z% of fluid 3. The total of the fraction typically amounts to 100% or substantially 100%. The first fluid 110, the second fluid 120 and the third fluid 130 may be mixed to a buffer composition 140 and provided to a chromatography apparatus 400 or provided to and mixed by the chromatography apparatus 400. The results or responses are pH and conductivity values of the buffer composition 140 measured by the chromatography apparatus 400.

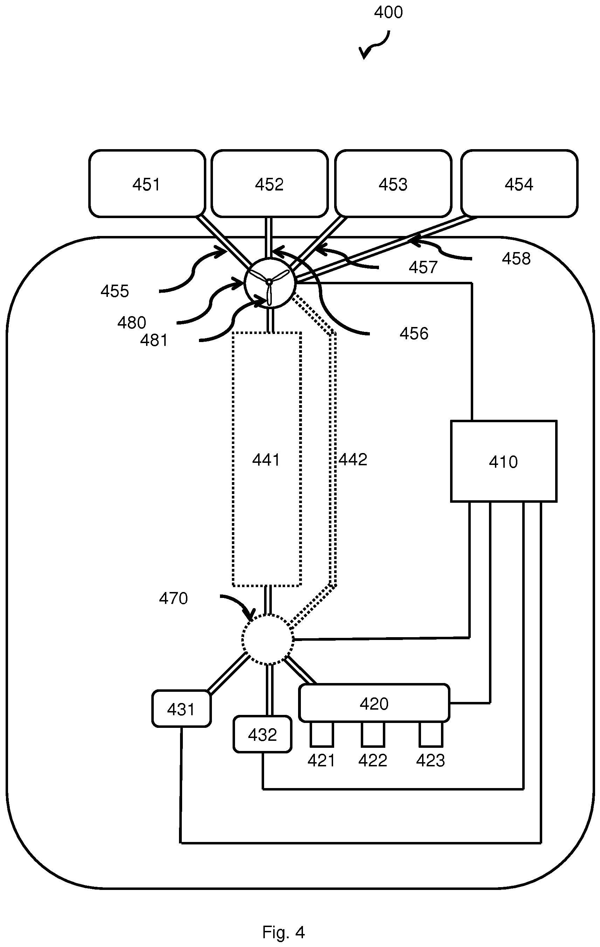

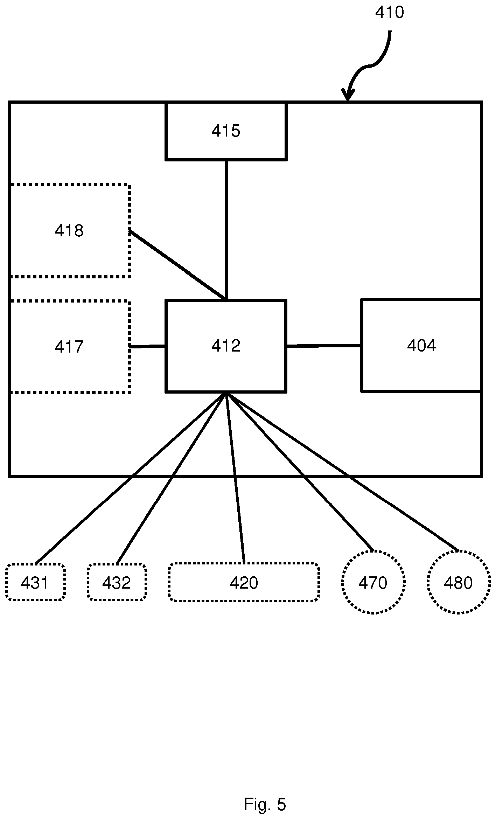

Fig. 4 shows a chromatography apparatus 400 according to one or more embodiments of the disclosure. The chromatography apparatus 400 may typically comprise a plurality of inlets 455-458. Each inlet is coupled to a reservoir 451-454 and each reservoir is configured to hold a fluid, e.g. any of the first fluid 110, the second fluid 120 and the third fluid 130. The inlets 455-458 may e.g. be implemented as tubular elements such as a tube or hose. The chromatography apparatus 400 may further comprise an injection unit 480 coupled to the plurality of inlets 455-458 and configured to provide a mix of the fluids comprised in the plurality of reservoirs 451-454 as a buffer composition 140 in response to a first control signal. The injection unit 480 may comprise a quaternary valve and/or a quaternary pump system and/or a mixer 481 configured to provide the mix of fluids as described above. The chromatography apparatus 400 may further comprise a pH sensor 431 coupled to the injection unit 480 and configured for measuring the pH of the provided buffer composition 140. The chromatography apparatus 400 may further comprise a conductivity sensor 432 coupled to the injection unit 480 and configured for measuring the conductivity of the provided buffer composition 140. The pH sensor 431 and/or the conductivity sensor 432 may further be configured to provide the measured pH and measured conductivity as control signals comprising measurement data to a control unit 410 comprising circuitry. The control unit 410 comprises a processor and a memory. The memory contains instructions executable by the processor, whereby said chromatography apparatus is operative to perform any of the methods described herein. The control unit 410 is further described in relation to Fig. 5. The chromatography apparatus 400 may further comprise an outlet valve 420 coupled to the injection unit 480. The outlet valve 420 may have one or more outlets or outlet ports 421-423 and is configured to provide the buffer composition 140 to the one or more outlets 421-423 in response to a second control signal, e.g. received from the control unit 410. The chromatography apparatus 400 may optionally comprise a splitter 470 coupled to the injection unit 480 and coupled to a selection of any of the pH sensor 431, the conductivity sensor 432 and the outlet valve 420. The splitter 470 may be configured to direct fluid received from the injection unit 480 to any of any of the pH sensor 431, the conductivity sensor 432 and the outlet valve 420, optionally in in response to a third control signal. The splitter 470 may be coupled to the injection unit 480 via a column 441 or a column connection 442, such as a tubular element. The outlet valve 420, the pH sensor 431 and the conductivity sensor 432 may be coupled to the injection unit 480 via the splitter 470 and/or the column 441 and/or the column connection 442. The pH sensor 431 and the conductivity sensor 432 may be also connected in series in between the splitter 470 and the outlet valve 420.

Fig. 5 shows the control unit 410 according to one or more embodiments of the present invention. The control unit 410 may be in the form of e.g. an Electronic Control Unit, a server, an on-board computer, a stationary computing device, a laptop computer, a tablet computer, a handheld computer, a wrist-worn computer, a smart watch, a smartphone or a smart TV. The control unit 410 may comprise a processor 412 communicatively coupled to a transceiver 404 configured for wired or wireless communication. The control unit 410 may further comprise at least one optional antenna (not shown in figure). The antenna may be coupled to the transceiver 404 and is configured to transmit and/or emit and/or receive wired or wireless signals in a communication network, such as WiFi, Bluetooth, 3G, 4G, 5G etc. In one example, the processor 412 may be any of a selection of processing circuitry and/or a central processing unit and/or processor modules and/or multiple processors configured to cooperate with each-other. Further, the control unit 410 may further comprise a memory 415. The memory 415 may e.g. comprise a selection of a hard RAM, disk drive, a floppy disk drive, a flash drive or other removable or fixed media drive or any other suitable memory known in the art. The memory 415 may contain instructions executable by the processor to perform any of the methods described herein. The processor 412 may be communicatively coupled to a selection of any of the transceiver 404, the memory 415 the pH sensor 431, the conductivity sensor 432, the outlet valve 420, the splitter 470 and the injection unit 480. The control unit 410 may be configured to send/receive control signals directly to any of the above mentioned units or to external nodes or to send/receive control signals via the wired and/or wireless communications network.

The wireless transceiver 404 and/or a wired/wireless communications network adapter may be configured to send and/or receive data values or parameters as a signal to or from the processor 412 to or from other external nodes. E.g. measured pH or conductivity values.

In an embodiment, the transceiver 404 communicates directly to external nodes or via the wireless communications network.

In one or more embodiments the control unit 410 may further comprise an input device 417, configured to receive input or indications from a user and send a user input signal indicative of the user input or indications to the processing means 412.

In one or more embodiments the control unit 410 may further comprise a display 418 configured to receive a display signal indicative of rendered objects, such as text or graphical user input objects, from the processing means 412 and to display the received signal as objects, such as text or graphical user input objects.

In one embodiment the display 418 is integrated with the user input device 417 and is configured to receive a display signal indicative of rendered objects, such as text or graphical user input objects, from the processing means 412 and to display the received signal as objects, such as text or graphical user input objects, and/or configured to receive input or indications from a user and send a user-input signal indicative of the user input or indications to the processing means 412.

In a further embodiment, the control unit 410 may further comprise and/or be coupled to one or more additional sensors (not shown in the figure) configured to receive and/or obtain and/or measure physical properties pertaining to the chromatography apparatus 400 and send one or more sensor signals indicative of the physical properties to the processing means 412.

In one or more embodiments, the processing means 412 is further communicatively coupled to the input device 417 and/or the display 418 and/or the additional sensors.

In embodiments, the communications network communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

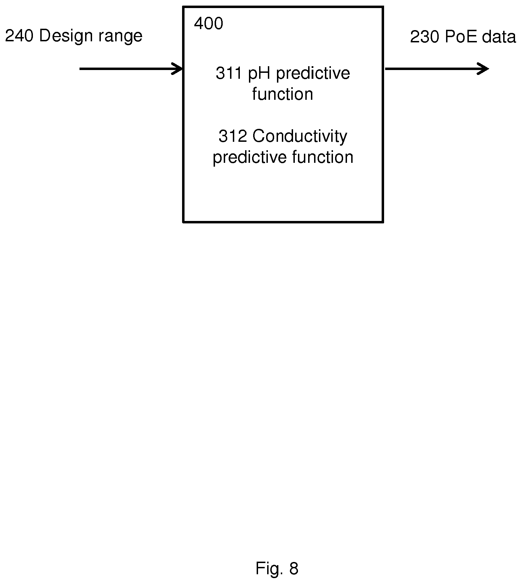

In one embodiment, a method 500 according to the present disclosure is provided. The method 500 may be suitable for determining one or more buffer compositions and/or buffer composition recipes for a chromatography apparatus 400 configured for performing chromatography. The method comprises obtaining 510 design of experiment, DoE, data 210, wherein the DoE data 210 is indicative of a set of buffer compositions and corresponding unique recipes 100. The DoE data 210 may e.g. be retrieved from memory. In an embodiment, the set of buffer compositions is selected as a subset from a total set of buffer compositions within a design range. The method may further comprise running 520 a first set of experiments 310, e.g. using the chromatography apparatus 400. In an example, the experiment is run by consecutively providing buffer compositions 140 mixed according to each unique recipe 100 indicated by the DoE data 210 as the only input to the chromatography apparatus 400. The method may further comprise obtaining 530 results of experiment, RoE, data 220 as output from the first set of experiments 310. In an embodiment, the RoE data 220 is indicative of at least a potential of hydrogen, pH, value of each buffer composition 140 of the set of buffer compositions and/or the total set of buffer compositions. Optionally, the method may further comprise obtaining 540 a first objective function 600. In an embodiment, the first objective function may at least be dependent on a pH value and a conductivity value. The method may further comprise selecting 550 a second subset from the set of buffer compositions and/or from the total set of buffer compositions which corresponding pH values optimize the first objective function. Optionally, the method further comprises determining 560 the one or more buffer composition recipes for chromatography of a chemical sample as the unique recipes corresponding to the second subset. In an embodiment, the method further comprises, obtaining 535 prediction of experimental, PoE data, wherein the PoE data is indicative of at least a predicted pH value and a predicted conductivity value of each buffer composition 140 of the total set of buffer compositions. Predicting pH values and conductivity values are further described in relation to Fig. 8.

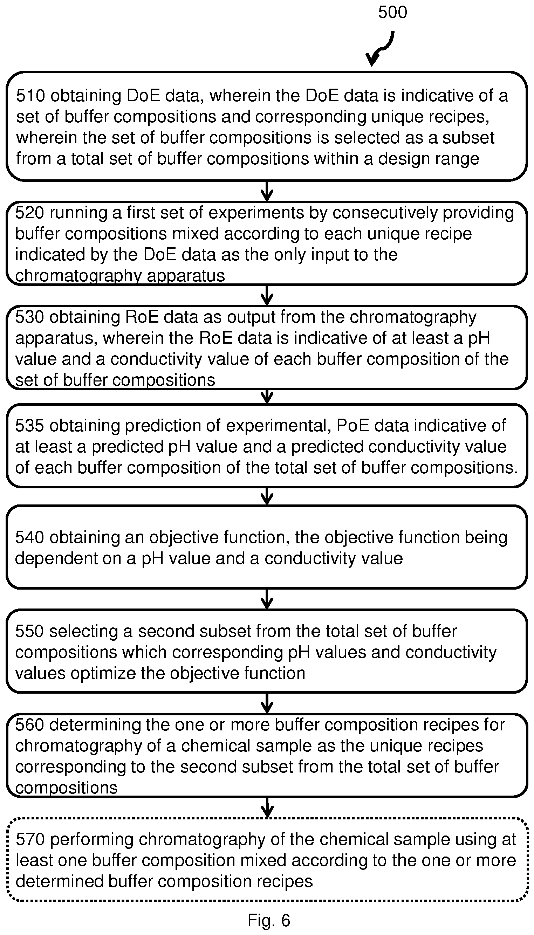

Fig. 6 shows a flowchart of a method 500 according to the present disclosure. The method 500 may be suitable for determining one or more buffer compositions and/or buffer composition recipes for a chromatography apparatus 400 configured for performing chromatography. The method comprises:

obtaining 510 design of experiment, DoE, data 210, wherein the DoE data 210 is indicative of a set of buffer compositions and corresponding unique recipes 100. In an embodiment, the set of buffer compositions is selected as a subset from a total set of buffer compositions within a design range. The method may further comprise running 520 a first set of experiments 310. The step of running 520 may be performed by consecutively providing buffer compositions 140 mixed according to each unique recipe 100 indicated by the DoE data 210, e.g. as the only input to the chromatography apparatus 400. In an embodiment, the method 500 further comprises obtaining 530 results of experiment, RoE, data 220, e.g. as output from the chromatography apparatus 400. The RoE data 220 may be indicative of at least a potential of hydrogen, pH, value of each buffer composition 140 of the set of buffer compositions. In an embodiment, the method 500 further comprises obtaining 535 prediction of experimental or prediction of experiment, PoE data. The PoE data may be indicative of at least a predicted pH value and a predicted conductivity value of each buffer composition 140 of the total set of buffer compositions. In an embodiment, the method 500 further comprises obtaining 540 a first objective function 600, the first objective function being at least dependent on a pH value and a conductivity value. In an embodiment, the method 500 further comprises selecting 550 a second subset from the total set of buffer compositions indicated by the DoE data which corresponding pH values optimize the first objective function. In an embodiment, the method 500 further comprises determining 560 the one or more buffer composition recipes for chromatography of a chemical sample as the unique recipes corresponding to the second subset from the total set of buffer compositions.

In one or more embodiments, wherein the RoE data 220 is further indicative of a conductivity value of each buffer composition 140 of the set of buffer compositions. In one or more embodiments, wherein the PoE data is further indicative of a conductivity value of each buffer composition 140 of the total set of buffer compositions. The first objective function may further be dependent on the conductivity value. In an embodiment, selecting 550 the second subset from the total set of buffer compositions further comprises selecting the second subset which corresponding conductivity values optimize the first objective function.

In an example, this involves selecting buffer compositions which corresponding pH value and/or conductivity values optimize the first objective function

In one or more embodiments, wherein the RoE data 220 is further indicative of a buffer composition concentration value of each buffer composition 140 of the set of buffer compositions, wherein the first objective function is further dependent on a buffer composition concentration value, wherein selecting 550 the second subset from the set of buffer compositions indicated by the DoE data further comprises selecting the second subset which corresponding conductivity values optimizes the first objective function.

In an example, this involves selecting buffer compositions which corresponding pH value and buffer composition concentration value optimize the first objective function In one or more embodiments, each unique recipe 100 indicated by the DoE data 210 is at least indicative of a first fraction 111 of a first fluid 110, a second fraction 121 of a second fluid 120 and a third fraction 131 of a third fluid 130.

In one or more embodiments, the first fluid 110 is an acid, the second fluid 120 is a base of the acid and the third fluid 130 is water.

In one or more embodiments, each unique recipe 100 indicated by the DoE data 210 is further indicative of a fourth fraction of a fourth fluid, wherein the fourth fluid is a salt solution.

In one or more embodiments, each unique recipe 100 indicated by the DoE data 210 is further indicative of a fourth fraction of a fourth fluid, wherein the fourth fluid is another solution. Examples of such an another solution can be an urea solution, an alcohol solution, a glycos solution, a detergent solution as well as additional acid or base solutions like a EDTA solution and a Tris base solution.

In one or more embodiments, the acid and the base are a conjugate pair.

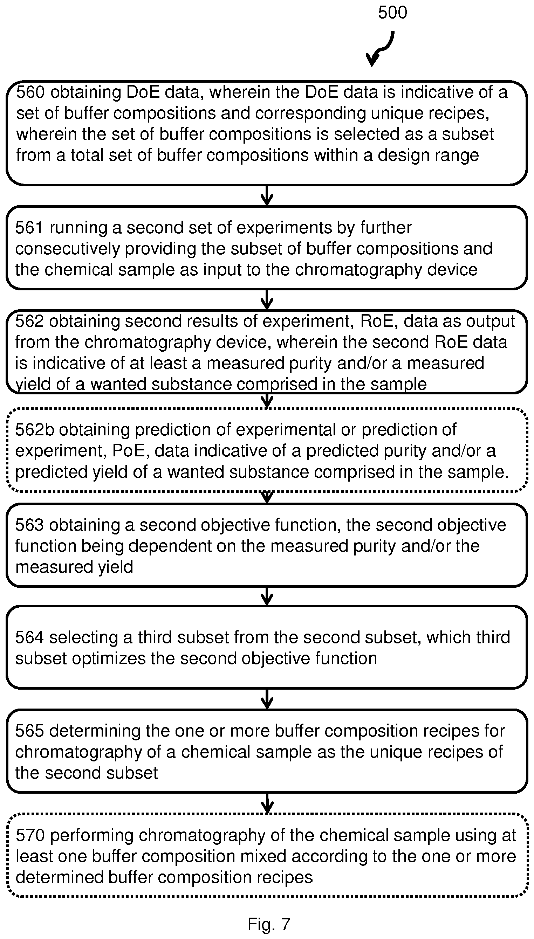

Fig. 7 shows details of a flowchart of the method 500 according to the present disclosure. In one or more embodiments, the method 500 further comprises the steps:

Running 561 a second set of experiments by further consecutively providing the second subset of buffer compositions and the chemical sample as input to the chromatography device.

Obtaining 562 second results of experiment, RoE, data as output from the chromatography device, wherein the second RoE data is indicative of at least a purity and/or a yield of a wanted substance comprised in the sample.

Optionally 562b obtaining prediction of experimental or prediction of experiment, PoE, data indicative of a predicted purity and/or a predicted yield of a wanted substance comprised in the sample.

EP 3 638 392 B1

Obtaining 563 a second objective function, the second objective function being dependent on the purity and/or the yield and/or being dependent on the pH and/or conductivity and/or concentration values.

Selecting 564 a third subset from the second subset, the second subset selected in step 550, which third subset optimizes the second objective function.

Determining 565 the one or more buffer composition recipes for chromatography of a chemical sample as the unique recipes of the third subset.

In one or more embodiments, the method 500 further comprises the steps:
Performing chromatography 570 of the chemical sample using at least one buffer composition mixed according to the one or more determined buffer composition recipes.

An advantage of this embodiment is that the quality of the output from the chromatography process is improved by using a buffer composition selected according to the present invention.

In an embodiment, obtaining 530 results of experiment, RoE, data 220 comprises obtaining the pH value by receiving a measured pH value from the pH sensor 431 and/or receiving a measured conductivity value from the conductivity sensor 432.

Fig. 8 illustrates how the PoE data 230 may be predicted by the chromatography apparatus 400 according to one or more embodiments of the invention. The PoE, data 230, may be obtained by applying a predictive function. A first set of experiments 310 by is run by consecutively providing buffer compositions 140 mixed according to each unique recipe 100 indicated by the DoE data 210 as the only input to the chromatography apparatus 400. As a first step, measured pH values and/or measured conductivity values of a set or a scouting set of buffer compositions selected from the set of buffer compositions are obtained. The scouting may be equal to or smaller than the total set of buffer compositions selected in step 550. The scouting set may be selected according to any conventional method, e.g. every Nth buffer composition of the set of buffer compositions.

In an embodiment, as a second step predicted pH values and/or predicted conductivity values of a remaining set of buffer compositions are obtained The remaining set of buffer compositions including buffer compositions comprised in the set of buffer compositions and excluded from the scouting set of buffer compositions.

At least one advantage of this embodiment is that the time it takes to obtain pH values and/or conductivity values of the entire set of buffer compositions is reduced by measuring pH or conductivity for the scouting set of buffer compositions and predicting the pH or conductivity for the remaining set of buffer compositions.

In an embodiment, as a second step, predicted pH values and/or predicted conductivity values of a extrapolated set of buffer compositions are obtained, the extrapolated set of buffer compositions including buffer compositions having recipes or fractions extrapolated from the set of buffer compositions and being within the design range.

At least one advantage of this embodiment is that a higher resolution of the RoE data 220 compared to the DoE data 210 may be obtained, thus improving the quality of the output from the chromatography process by using a buffer composition selected according to the present invention.

In an embodiment, a computer program comprising computer-executable instructions for causing the chromatography apparatus 400 or the control unit 110, when the computer-executable instructions are executed on a processing unit comprised in the chromatography apparatus 400 or control unit 410, to perform any of the method steps of any of the embodiments described herein.

In an embodiment, a computer program product comprising a memory and/or a computer-readable storage medium, the computer-readable storage medium having the computer program described above embodied therein.

Optimization typically involves selecting one or more best elements with regard a criterion or an objective function dependent on variables from some set of available alternatives. The variables of the objective function may optionally be delimited by constraints or conditions.

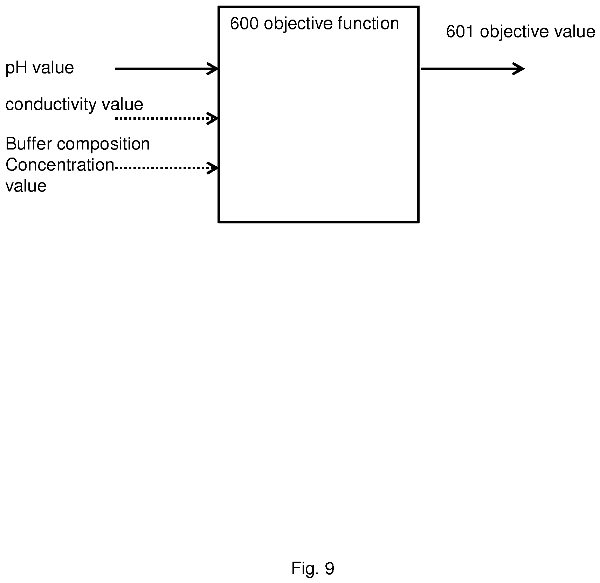

Fig. 9 schematically illustrates an objective function 600 dependent on one or more variables according to one or more embodiments of the present invention. In the example shown in in Fig. 9, the variables include a selection of any of a pH value, a conductivity value and Buffer composition concentration value. Depending on the variables, an output value or objective value 601 of the objective function 600 is generated. The value range of the variables may be delimited by a lower constraint and an upper constraint, e.g. indicated in the RoE data. In the example shown in Fig. 9, optimizing the objective function 600 typically involves finding a value or a value range of each variable that maximizes and/or minimizes the objective function 600.Such constraints may e.g. include a pH value range, a conductivity value range and a buffer composition concentration value range.

In one example, pH values indicated by the RoE data that lies within a given pH value range are selected and individually fed to the objective function 600 such that a corresponding objective value 601 is obtained for each of the selected pH values. One or more buffer compositions may then be selected if their corresponding pH values optimizes the objective function 600. This may involve having a maximum objective value 601 or having objective values 601 above a predetermined threshold, .e.g. pH desired min. Alternatively or additionally, this may involve having a minimum objective value 601 or having objective values 601 below a predetermined threshold pH desiredmax.

It is understood that an objective function may be multidimensional and thus be dependent on multiple variables.

8

Optimizing the objective function may involve multidimensional optimization of a plurality of variables.

In an embodiment, the first objective function is dependent on a pH value and/or a conductivity value and/or a buffer composition concentration value.

In one example, the first objective function may be defined as:

$$objective\ value\ f(P) = \begin{cases} 1\ if\ pH\ _{desiredmin} < P \le pH\ _{desiredmax} \\ 0\ if\ if\ pH\ _{desiredmin} > P\ or\ P > pH\ _{desiredmax} \end{cases}$$

Where P is a variable indicative of pH, pH desiredmin is a minimum desirable pH and pHdesiredmax is a maximum desired pH. Selecting the second subset from the set of buffer compositions which corresponding pH values optimize the first objective function typically comprises maximizing and/or minimizing the objective value 601 of this objective function.

In one further example, the first objective function may be defined as:

$$objective\ value f(C) = \begin{cases} 1 & if\ Conductivity\ _{desiredmin} < P \le Conductivity\ _{desiredmax} \\ 0 & if\ if\ Conductivity_{desiredmin} > P\ or\ P > Conductivity_{desiredmax} \end{cases}$$

Where C is a variable indicative of conductivity, Conductivity desiredmin is a minimum desirable conductivity and Conductivity desiredmax is a maximum desired conductivity. Selecting the second subset from the set of buffer compositions which corresponding conductivity values optimize the first objective function typically comprises maximizing and/or minimizing the objective value 601 of this objective function.

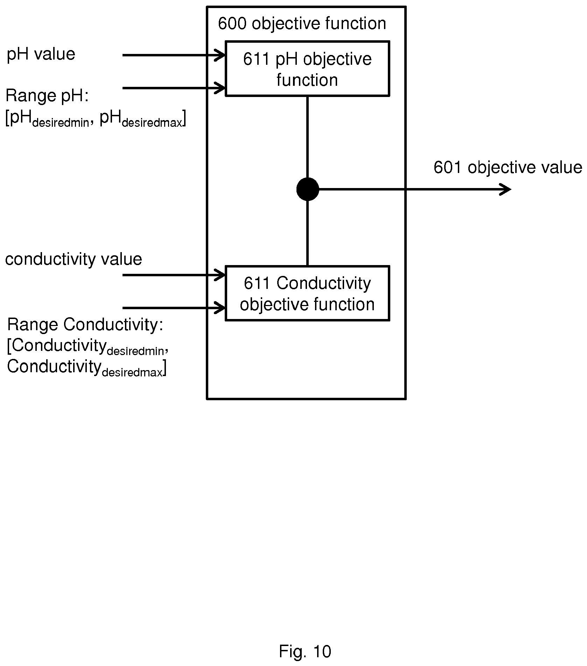

Fig. 10 illustrates an objective function comprising a first pair of objective functions according to the present invention.

In an embodiment, the first objective function 600 comprises a first pair of objective functions 611, 612 comprising a pH objective function 611 and/or a conductivity objective function 612. The pH objective function 611 may be dependent on a set of predicted pH values and a desired pH value range, e.g. [pH desiredmin, pH desiredmax]. The conductivity objective function 612 may be dependent on a set of predicted conductivity values and a desired conductivity value range, e.g. [Conductivity desiredmin, Conductivity desiredmax].

In an embodiment, the set of predicted pH values may at least partially be obtained by applying a pH predictive function 311. Alternatively or additionally the set of predicted conductivity values may at least partially be obtained by applying a conductivity predictive function 312. Applying predictive functions are further described in relation to Fig. 8.

In an embodiment, the pH predictive function is configured to predict pH values of each buffer composition 140 of the set of buffer compositions based on the DoE data and/or the conductivity predictive function is configured to predict conductivity values of each buffer composition 140 of the set of buffer compositions based on the DoE data.

In one example illustrating how the first objective function comprises a pH objective function 611 and a conductivity objective function 612 is shown below:

$$611\ pH\ objective\ function\ f(P) = \begin{matrix} 1 & if\ pH\ desired_{min} < P \le pH\ desired_{max}\ and \\ 0 & if\ if\ pH\ desired_{min} > P\ or\ P > pH\ desired_{max} \end{matrix}\ and$$

$$612\ conductivity\ objective\ function\ f(P,C)$$

$$= \begin{matrix} 1 & Conductivity\ desired_{min} < P \le Conductivity\ desired_{max} \\ 0 & if\ if\ Conductivity desired_{min} > P\ or\ P > Conductivity\ desired_{max} \end{matrix}$$

The pH objective function 611 and the conductivity objective function 612 may then be combined to the objective function 600.

$$f(P,C) = \begin{array}{c} 1 \\ \\ 0 \end{array} \quad \begin{array}{l} if\ pH\ desired_{min} < P \le pH\ desired_{max}\ and \\ Conductivity\ desired_{min} < P \le Conductivity\ desired_{max} \\ and \\ if\ if\ pH\ desired_{min} > P\ or\ P > pH\ desired_{max} \\ if\ if\ Conductivity desired_{min} > P\ or\ P > Conductivity\ desired_{max} \end{array}$$

Where P is a variable indicative of pH, C is a variable indicative of conductivity, as defined above. Optimizing the objective function typically comprises maximizing and/or minimizing this objective function.

In one further example, the first objective function may be defined as:

$$f(P,C) = k_1 * |P - pH\ desired| + k_2 |C - Conductivity\ desired|$$

Where P is a variable indicative of pH, C is a variable indicative of conductivity, as defined above, $k_1$ and $k_2$ constants and pH desired and Conductivity desired are target values of pH and conductivity. Optimizing the objective function typically comprises minimizing and/or maximizing this objective function.

In an embodiment, the second objective function is dependent on purity and/or yield.

In one further example, the second objective function may be defined as:

$$f(Y) = |Y - Yield\ desired|$$

Where Y is a variables indicative of yield. Yield desired is a target value of yield. Optimizing the objective function typically comprises minimizing and/or maximizing this objective function.

In one further example, the second objective function may be defined as:

$$f(PUR) = |PUR - Purity\ desired|$$

Where PUR is a variables indicative of purity of the chromatography apparatus output fluid, e.g. in terms of a wanted protein. Purity desired is a target value of purity. Optimizing the objective function typically comprises minimizing and/or maximizing this objective function.

Moreover, it is realized by the skilled person that the control unit 410 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processor and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processor" and/or "processing means" may thus represent a processing circuitry comprising a plurality of processing circuits, such as, e.g., any, some or all of the ones mentioned above. The processing means may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

**Claims**

1. A method (500) for determining one or more buffer composition recipes for a chromatography apparatus (400) configured for performing chromatography, the method comprising:

obtaining (510) design of experiment, DoE, data (210), wherein the DoE data (210) is indicative of a set of buffer compositions and corresponding unique recipes (100), wherein the set of buffer compositions is selected as a subset from a total set of buffer compositions within a design range,

running (520) a first set of experiments (310) by consecutively providing buffer compositions (140) mixed according to each unique recipe (100) indicated by the DoE data (210) as the only input to the chromatography apparatus (400),

obtaining (530) results of experiment, RoE, data (220) as output from the chromatography apparatus (400), wherein the RoE data (220) is indicative of at least a potential of hydrogen, pH, value and a conductivity value of each buffer composition (140) of the set of buffer compositions,

obtaining (535) prediction of experimental, PoE data, wherein the PoE data is indicative of at least a predicted pH value and a predicted conductivity value of each buffer composition (140) of the total set of buffer compositions,

obtaining (540) a first objective function (600), the first objective function being dependent on a pH value and a conductivity value,

selecting (550) a second subset from the total set of buffer compositions which corresponding pH values and conductivity values optimize the first objective function,

determining (560) the one or more buffer composition recipes for chromatography of a chemical sample as the unique recipes corresponding to the second subset from the total set of buffer compositions.

2. The method (500) according to claim 1, wherein the first objective function comprise a first pair of objective functions (611, 612) comprising a pH objective function (611) and a conductivity objective function (612), wherein the pH objective function (611) is dependent on a set of predicted pH values and a desired pH value range and the conductivity objective function (612) is dependent on a set of predicted conductivity values and a desired conductivity value range, and optionally wherein the set of predicted pH values is obtained by applying a pH predictive function (311) and the set of predicted conductivity values is obtained by applying a conductivity predictive function (312).

3. The method (500) according to any of the preceding claims, wherein each unique recipe (100) indicated by the DoE data (210) is at least indicative of a first fraction (111) of a first fluid (110), a second fraction (121) of a second fluid (120) and a third fraction (131) of a third fluid (130).

4. The method (500) according to claim 3, wherein the first fluid (110) is an acid, the second fluid (120) is a base of the acid and the third fluid (130) is water; and/or optionally wherein each unique recipe (100) indicated by the DoE data (210) is further indicative of a fourth fraction of a fourth fluid, wherein the fourth fluid is a salt solution; and/or optionally wherein the fourth fluid is used to adjust the conductivity and the first fraction (111) and the second fraction (121) are constrained by a given buffer concentration.

5. The method (500) according to claim 4, wherein each unique recipe (100) indicated by the DoE data (210) is further indicative of a fourth fraction of a fourth fluid, wherein the fourth fluid is another solution.

6. The method (500) according to claim 4 or 5, wherein the acid and the base are a conjugate pair, and where the first fraction (111) and the second fraction (121) are constrained by a given buffer concentration.

7. The method (500) according to any of the preceding claims, further comprising:

running (561) a second set of experiments by further consecutively providing the second subset of buffer compositions and the chemical sample as input to the chromatography device,

obtaining (562) second results of experiment, RoE, data as output from the chromatography device, wherein the second RoE data is indicative of at least a purity and/or a yield of a wanted substance comprised in the sample,

obtaining (562b) prediction of experimental or prediction of experiment, PoE, data indicative of a predicted purity and/or a predicted yield of a wanted substance comprised in the sample,

obtaining (563) a second objective function, the second objective function being dependent on a purity and/or a yield,

selecting (564) a third subset from the second subset, which third subset optimizes the second objective function, and

determining (565) the one or more buffer composition recipes for chromatography of a chemical sample as the unique recipes of the third subset.

8. The method (500) according to any of the preceding claims, further comprising:
performing chromatography (570) of the chemical sample using at least one buffer composition mixed according to the one or more determined buffer composition recipes.

9. The method (500) according to any of claims 3-6, wherein the unique recipes (100) indicated by the DoE data (210) comprises constant first fractions (111) of acid and varying second fractions (121) of base.

10. The method (500) according to any of claims 3-6, wherein the unique recipes (100) indicated by the DoE data (210) comprises varying first fractions (111) of acid and constant second fractions (121) of base.

11. The method (500) according to any of claims 4-8, wherein the unique recipes (100) indicated by the DoE data (210) comprises constant first fractions (111) of acid and varying second fractions (121) of base and varying fourth fractions of salt solution.

12. The method (500) according to any of claims 4-8, wherein the unique recipes (100) indicated by the DoE data (210) comprises varying first fractions (111) of acid and constant second fractions (121) of base and varying fourth fractions of salt solution.

13. A chromatography apparatus (400) configured for performing chromatography, the chromatography apparatus (400) comprising:

a plurality of inlets (455-458), each inlet coupled to a reservoir (451-454) and each reservoir configured to hold a fluid,
an injection unit (480) coupled to the plurality of inlets (455-458) and configured to provide a mix of fluids comprised in the plurality of reservoirs (451-454) as a buffer composition (140) in response to a first control signal, wherein the injection unit (480) optionally comprises a quaternary valve,
a pH sensor (431) coupled to the injection unit (480) and configured for measuring the pH value of the provided buffer composition (140),
a conductivity sensor (432) coupled to the injection unit (480) and configured for measuring the conductivity of the provided buffer composition (140),
a control unit comprising circuitry (410) comprising:

a processor, and
a memory, said memory containing instructions executable by said processor, whereby said chromatography apparatus is operative to perform the method according to any of claims 1-12.

14. The chromatography apparatus (400) according to claim 13, the chromatography apparatus (400) further comprising:
an outlet valve (420) coupled to the injection unit (480) and one or more outlets (421-423) and configured to provide the buffer composition (140) to the one or more outlets (421-423) in response to a second control signal.

15. The chromatography apparatus (400) according to claim 13 or 14, the chromatography apparatus (400) further comprising:
a splitter (470) coupled to the injection unit (480) and a selection of the pH sensor (431), the conductivity sensor (432) and the outlet valve (420), and wherein the splitter (470) is optionally coupled to the injection unit (480) via a column (441) or a column connection (442).

**Patentansprüche**

1. Verfahren (500) zum Bestimmen einer oder mehrerer Pufferzusammensetzungsrezepturen für ein Chromatographiegerät (400), das dazu konfiguriert ist, Chromatographie durchzuführen, wobei das Verfahren Folgendes umfasst:

Erhalten (510) von Versuchsplanungsdaten, DoE-Daten, (210), wobei die DoE-Daten (210) einen Satz von Pufferzusammensetzungen und entsprechenden eindeutigen Rezepturen (100) angeben, wobei der Satz von Pufferzusammensetzungen als ein Teilsatz aus einem Gesamtsatz von Pufferzusammensetzungen innerhalb eines Versuchsplanungsbereichs ausgewählt wird,
Durchführen (520) eines ersten Satzes von Versuchen (310) durch aufeinanderfolgendes Bereitstellen von Pufferzusammensetzungen (140), die gemäß jeder eindeutigen Rezeptur (100) gemischt sind, die von den DoE-Daten (210) angegeben werden, als einzige Eingabe in das Chromatographiegerät (400),
Erhalten (530) von Versuchsergebnisdaten, RoE-Daten, (220), als Ausgabe aus dem Chromatographiegerät (400), wobei die RoE-Daten (220) mindestens einen Wasserstoffpotenzialwert, pH-Wert, und einen Leitfähigkeitswert jeder Pufferzusammensetzung (140) des Satzes von Pufferzusammensetzungen angeben,

Erhalten (535) von Vorhersage experimenteller Daten, PoE-Daten, wobei die PoE-Daten mindestens einen vorhergesagten pH-Wert und einen vorhergesagten Leitfähigkeitswert jeder Pufferzusammensetzung (140) des Gesamtsatzes von Pufferzusammensetzungen angeben,

Erhalten (540) einer ersten Zielfunktion (600), wobei die erste Zielfunktion von einem pH-Wert und einem Leitfähigkeitswert abhängt,

Auswählen (550) eines zweiten Teilsatzes aus dem Gesamtsatz von Pufferzusammensetzungen, dessen entsprechende pH-Werte und Leitfähigkeitswerte die erste Zielfunktion optimieren,

Bestimmen (560) der einen oder mehreren Pufferzusammensetzungsrezepturen für Chromatographie einer chemischen Probe als die eindeutigen Rezepturen, die dem zweiten Teilsatz des Gesamtsatzes von Pufferzusammensetzungen entsprechen.

2. Verfahren (500) nach Anspruch 1, wobei die erste Zielfunktion Folgendes umfasst

ein erstes Paar von Zielfunktionen (611, 612), das eine pH-Zielfunktion (611) und eine Leitfähigkeitszielfunktion (612) umfasst, wobei die pH-Zielfunktion (611) von einem Satz vorhergesagter pH-Werte und einem gewünschten pH-Wertebereich abhängt, und die Leitfähigkeitszielfunktion (612) von einem Satz vorhergesagter Leitfähigkeitswerte und einem gewünschten Leitfähigkeitswertbereich abhängt, und wobei der Satz vorhergesagter pH-Werte wahlweise durch Anwenden einer pH-Vorhersagefunktion (311) erhalten wird, und der Satz vorhergesagter Leitfähigkeitswerte durch Anwenden einer Leitfähigkeitsvorhersagefunktion (312) erhalten wird.

3. Verfahren (500) nach einem der vorstehenden Ansprüche, wobei jede eindeutige Rezeptur (100), die von den DoE-Daten (210) angegeben wird, mindestens eine erste Fraktion (111) eines ersten Fluids (110), eine zweite Fraktion (121) eines zweiten Fluids (120) und eine dritte Fraktion (131) eines dritten Fluids (130) angibt.

4. Verfahren (500) nach Anspruch 3, wobei das erste Fluid (110) eine Säure ist, das zweite Fluid (120) eine Base der Säure ist, und das dritte Fluid (130) Wasser ist; und/oder wobei wahlweise jede eindeutige Rezeptur (100), die von den DoE-Daten (210) angegeben wird, weiter eine vierte Fraktion eines vierten Fluids angibt, wobei das vierte Fluid eine Salzlösung ist; und/oder wobei wahlweise das vierte Fluid verwendet wird, um die Leitfähigkeit einzustellen, und die erste Fraktion (111) und die zweite Fraktion (121) von einer gegebenen Pufferkonzentration eingeschränkt sind.

5. Verfahren (500) nach Anspruch 4, wobei jede eindeutige Rezeptur (100), die von den DoE-Daten (210) angegeben wird, weiter eine vierte Fraktion eines vierten Fluids angibt, wobei das vierte Fluid eine andere Lösung ist.

6. Verfahren (500) nach Anspruch 4 oder 5, wobei die Säure und die Base ein konjugiertes Paar sind, und wobei die erste Fraktion (111) und die zweite Fraktion (121) von einer gegebenen Pufferkonzentration eingeschränkt sind.

7. Verfahren (500) nach einem der vorstehenden Ansprüche, das weiter Folgendes umfasst:

Durchführen (561) eines zweiten Satzes von Versuchen durch weiteres aufeinanderfolgendes Bereitstellen des zweiten Teilsatzes von Pufferzusammensetzungen und der chemischen Probe als Eingabe in das Chromatographiegerät,

Erhalten (562) zweiter Versuchsergebnisdaten, RoE-Daten, als Ausgabe des Chromatographiegeräts, wobei die zweiten RoE-Daten mindestens eine Reinheit und/oder einen Ertrag einer gewünschten Substanz, die in der Probe enthalten ist, angeben,

Erhalten (562b) von Vorhersage experimenteller Daten oder Versuchsvorhersagedaten, PoE-Daten, die eine vorhergesagte Reinheit und/oder einen vorhergesagten Ertrag einer gewünschten Substanz, die in der Probe enthalten ist, angeben,

Erhalten (563) einer zweiten Zielfunktion, wobei die zweite Zielfunktion von einer Reinheit und/oder einem Ertrag abhängt,

Auswählen (564) eines dritten Teilsatzes aus dem zweiten Teilsatz, wobei der dritte Teilsatz die zweite Zielfunktion optimiert, und

Bestimmen (565) der einen oder mehreren Pufferzusammensetzungsrezepturen für Chromatographie einer chemischen Probe als die eindeutigen Rezepturen des dritten Teilsatzes.

8. Verfahren (500) nach einem der vorstehenden Ansprüche, das weiter Folgendes umfasst:
Durchführen von Chromatographie (570) der chemischen Probe unter Verwendung mindestens einer Pufferzusammensetzung, die gemäß der einen oder mehreren bestimmten Pufferzusammensetzungsrezepturen gemischt ist.

9. Verfahren (500) nach einem der Ansprüche 3-6, wobei die eindeutigen Rezepturen (100), die von den DoE-Daten (210) angegeben werden, konstante erste Fraktionen (111) von Säure und variierende zweite Fraktionen (121) von Base umfassen.

10. Verfahren (500) nach einem der Ansprüche 3-6, wobei die eindeutigen Rezepturen (100), die von den DoE-Daten (210) angegeben werden, variierende erste Fraktionen (111) von Säure und konstante zweite Fraktionen (121) von Base umfassen.

11. Verfahren (500) nach einem der Ansprüche 4-8, wobei die eindeutigen Rezepturen (100), die von den DoE-Daten (210) angegeben werden, konstante erste Fraktionen (111) von Säure und variierende zweite Fraktionen (121) von Base und variierende vierte Fraktionen von Salzlösung umfassen.

12. Verfahren (500) nach einem der Ansprüche 4-8, wobei die eindeutigen Rezepturen (100), die von den DoE-Daten (210) angegeben werden, variierende erste Fraktionen (111) von Säure und konstante zweite Fraktionen (121) von Base sowie variierende vierte Fraktionen von Salzlösung umfassen.

13. Chromatographiegerät (400), das zum Durchführen von Chromatographie konfiguriert ist, wobei das Chromatographiegerät (400) Folgendes umfasst:

eine Vielzahl von Einlässen (455-458), wobei jeder Einlass mit einem Vorratsbehälter (451-454) gekoppelt ist, und jeder Vorratsbehälter dazu konfiguriert ist, ein Fluid zu enthalten,
eine Einspritzeinheit (480), die mit der Vielzahl von Einlässen (455-458) gekoppelt und dazu konfiguriert ist, eine Mischung von Fluiden, die in der Vielzahl von Vorratsbehältern (451-454) enthalten sind, als eine Pufferzusammensetzung (140) als Reaktion auf ein erstes Steuersignal bereitzustellen, wobei die Einspritzeinheit (480) wahlweise ein quaternäres Ventil umfasst,
einen pH-Sensor (431), der mit der Einspritzeinheit (480) gekoppelt und dazu konfiguriert ist, den pH-Wert der bereitgestellten Pufferzusammensetzung (140) zu messen,
einen Leitfähigkeitssensor (432), der mit der Einspritzeinheit (480) gekoppelt und dazu konfiguriert ist, die Leitfähigkeit der bereitgestellten Pufferzusammensetzung (140) zu messen,
eine Steuereinheit, die Schaltungsanordnungen (410) umfasst, die Folgendes umfassen:

einen Prozessor, und
einen Speicher, wobei der Speicher Anweisungen enthält, die von dem Prozessor ausführbar sind, wodurch das Chromatographiegerät betriebsbereit ist, um das Verfahren nach einem der Ansprüche 1-12 durchzuführen.

14. Chromatographiegerät (400) nach Anspruch 13, wobei das Chromatographiegerät (400) weiter Folgendes umfasst: ein Auslassventil (420), das mit der Einspritzeinheit (480) und einem oder mehreren Auslässen (421-423) gekoppelt und dazu konfiguriert ist, die Pufferzusammensetzung (140) zu dem einen oder den mehreren Auslässen (421-423) als Reaktion auf ein zweites Steuersignal bereitzustellen.

15. Chromatographiegerät (400) nach Anspruch 13 oder 14, wobei das Chromatographiegerät (400) weiter Folgendes umfasst:
einen Splitter (470), der mit der Einspritzeinheit (480) und einer Auswahl des pH-Sensors (431), des Leitfähigkeitssensors (432) und des Auslassventils (420) gekoppelt ist, und wobei der Splitter (470) wahlweise mit der Einspritzeinheit (480) über eine Säule (441) oder eine Säulenverbindung (442) gekoppelt ist.

**Revendications**

1. Procédé (500) pour déterminer une ou plusieurs recettes de composition de tampon pour un appareil de chromatographie (400) configuré pour effectuer une chromatographie, le procédé comprenant les étapes consistant à :

obtenir (510) des données de plan d'expériences (210), DoE, dans lequel les données de plan d'expériences (210) sont indicatives d'un ensemble de compositions de tampon et de recettes uniques correspondantes (100), dans lequel l'ensemble de compositions de tampon est sélectionné en tant que sous-ensemble d'un ensemble total de compositions de tampon dans une plage de plan,

exécuter (520) une première série d'expériences (310) en fournissant consécutivement des compositions de tampon (140) mélangées selon chaque recette unique (100) indiquée par les données DoE (210) en tant que seule entrée dans l'appareil de chromatographie (400),

obtenir (530) des résultats de données d'expérience (220), RoE, en sortie de l'appareil de chromatographie (400), dans lequel les données RoE (220) sont indicatives d'au moins une valeur de potentiel d'hydrogène (pH) et une valeur de conductivité de chaque composition de tampon (140) de l'ensemble de compositions de tampon,

obtenir (535) une prédiction des données expérimentales, PoE, dans lequel les données PoE sont indicatives d'au moins une valeur de pH prédite et une valeur de conductivité prédite de chaque composition de tampon (140) de l'ensemble total des compositions de tampon,

obtenir (540) une première fonction objective (600), la première fonction objective étant dépendante d'une valeur de pH et d'une valeur de conductivité,

sélectionner (550) un deuxième sous-ensemble parmi l'ensemble de compositions de tampon dont les valeurs de pH et de conductivité correspondantes optimisent la première fonction objective,

déterminer (560) la ou les recettes de composition de tampon pour la chromatographie d'un échantillon chimique en tant que recettes uniques correspondant au deuxième sous-ensemble parmi l'ensemble de compositions de tampon.

**2.** Procédé (500) selon la revendication 1, dans lequel la première fonction objective comprend

une première paire de fonctions objectives (611, 612) comprenant une fonction objective de pH (611) et une fonction objective de conductivité (612), dans lequel la fonction objective de pH (611) dépend d'un ensemble de valeurs de pH prédites et d'une plage de valeurs de pH souhaitée et la fonction objective de conductivité (612) dépend d'un ensemble de valeurs de conductivité prédites et d'une plage de valeurs de conductivité souhaitée, et facultativement, dans lequel l'ensemble des valeurs de pH prédites est obtenu par l'application d'une fonction prédictive de pH (311) et l'ensemble des valeurs de conductivité prédites est obtenu par l'application d'une fonction prédictive de conductivité (312).

**3.** Procédé (500) selon l'une quelconque des revendications précédentes, dans lequel chaque recette unique (100) indiquée par les données DoE (210) est au moins indicative d'une première fraction (111) d'un premier fluide (110), d'une deuxième fraction (121) d'un deuxième fluide (120) et d'une troisième fraction (131) d'un troisième fluide (130).

**4.** Procédé (500) selon la revendication 3, dans lequel le premier fluide (110) est un acide, le deuxième fluide (120) est une base de l'acide et le troisième fluide (130) est de l'eau ; et/ou facultativement dans lequel chaque recette unique (100) indiquée par les données DoE (210) est en outre indicative d'une quatrième fraction d'un quatrième fluide, dans lequel le quatrième fluide est une solution saline ; et/ou facultativement dans lequel le quatrième fluide est utilisé pour ajuster la conductivité et la première fraction (111) et la deuxième fraction (121) sont contraintes par une concentration de tampon donnée.

**5.** Procédé (500) selon la revendication 4, dans lequel chaque recette unique (100) indiquée par les données DoE (210) est en outre indicative d'une quatrième fraction d'un quatrième fluide, dans lequel le quatrième fluide est une autre solution.

**6.** Procédé (500) selon la revendication 4 ou 5, dans lequel l'acide et la base sont une paire conjuguée, et dans lequel la première fraction (111) et la deuxième fraction (121) sont contraintes par une concentration de tampon donnée.

**7.** Procédé (500) selon l'une quelconque des revendications précédentes, comprenant en outre l'étape consistant à :

exécuter (561) une deuxième série d'expériences en fournissant consécutivement en outre le deuxième sous-ensemble de compositions de tampon et l'échantillon chimique en tant qu'entrée dans le dispositif de chromatographie,

obtenir (562) des deuxièmes résultats de données d'expérience, RoE, en sortie du dispositif de chromatographie, dans lequel les deuxièmes données RoE sont indicatives d'au moins une pureté et/ou d'un rendement d'une substance recherchée contenue dans l'échantillon,

obtenir (562b) des données de prédiction expérimentale ou de prédiction d'expérience, PoE, indicatives d'une pureté prédite et/ou d'un rendement prédit d'une substance recherchée contenue dans l'échantillon,

obtenir (563) une deuxième fonction objective, la deuxième fonction objective étant dépendante d'une pureté et/ou d'un rendement,

sélectionner (564) un troisième sous-ensemble parmi le deuxième sous-ensemble, ce troisième sous-ensemble optimisant la deuxième fonction objective, et

déterminer (565) la ou les recettes de composition de tampon pour la chromatographie d'un échantillon chimique en tant que recettes uniques du troisième sous-ensemble.

8. Procédé (500) selon l'une quelconque des revendications précédentes, comprenant en outre l'étape consistant à : effectuer la chromatographie (570) de l'échantillon chimique en utilisant au moins une composition de tampon mélangée selon une ou plusieurs recettes de composition de tampon déterminées.

9. Procédé (500) selon l'une quelconque des revendications 3-6, dans lequel les recettes uniques (100) indiquées par les données DoE (210) comprennent de premières fractions constantes (111) d'acide et des deuxièmes fractions variables (121) de base.

10. Procédé (500) selon l'une quelconque des revendications 3-6, dans lequel les recettes uniques (100) indiquées par les données DoE (210) comprennent des premières fractions variables (111) d'acide et des deuxièmes fractions (121) constantes de base.

11. Procédé (500) selon l'une quelconque des revendications 4-8, dans lequel les recettes uniques (100) indiquées par les données DoE (210) comprennent de premières fractions constantes (111) d'acide et de deuxièmes fractions variables (121) de base et de quatrièmes fractions variables de solution saline.

12. Procédé (500) selon l'une quelconque des revendications 4-8, dans lequel les recettes uniques (100) indiquées par les données DoE (210) comprennent de premières fractions variables (111) d'acide et de deuxièmes fractions constantes (121) de base et de quatrièmes fractions variables de solution saline.

13. Appareil de chromatographie (400) configuré pour effectuer une chromatographie, l'appareil de chromatographie (400) comprenant :

une pluralité d'entrées (455-458), chaque entrée étant couplée à un réservoir (451-454) et chaque réservoir étant configuré pour contenir un fluide,

une unité d'injection (480) couplée à la pluralité d'entrées (455-458) et configurée pour fournir un mélange de fluides compris dans la pluralité de réservoirs (451-454) en tant que composition de tampon (140) en réponse à un premier signal de commande, dans lequel l'unité d'injection (480) comprend facultativement une vanne quaternaire,

un capteur de pH (431) couplé à l'unité d'injection (480) et configuré pour mesurer la valeur du pH de la composition de tampon fournie (140),

un capteur de conductivité (432) couplé à l'unité d'injection (480) et configuré pour mesurer la conductivité de la composition de tampon fournie (140),

une unité de commande comprenant des circuits (410) comprenant :

un processeur, et

une mémoire, ladite mémoire contenant des instructions exécutables par ledit processeur, de sorte que ledit appareil de chromatographie est en mesure d'exécuter le procédé selon l'une quelconque des revendications 1-12.

14. Appareil de chromatographie (400) selon la revendication 13, l'appareil de chromatographie (400) comprenant en outre :

une vanne de sortie (420) couplée à l'unité d'injection (480) et à une ou plusieurs sorties (421-423) et configurée pour fournir la composition de tampon (140) à une ou plusieurs sorties (421-423) en réponse à un second signal de commande.

15. Appareil de chromatographie (400) selon la revendication 13 ou 14, l'appareil de chromatographie (400) comprenant en outre :

un séparateur (470) couplé à l'unité d'injection (480) et à une sélection du capteur de pH (431), du capteur de conductivité (432) et de la vanne de sortie (420), et dans lequel le séparateur (470) est facultativement couplé à l'unité d'injection (480) par l'intermédiaire d'une colonne (441) ou d'une connexion de colonne (442).

100 Recipe

110 Fluid 1     120 Fluid 2     …     130 Fluid J

121 Y%

111 X%

131 Z%

140 Buffer composition

Fig. 1

| Experiment 1 | $(F_{11}, ..., F_{1N})$ |
| Experiment 2 | $(F_{21}, ..., F_{2N})$ |
| ... ... | |
| Experiment M | $(F_{M1}, ..., F_{MN})$ |

210 DoE data

| Experiment 1 | $(R_{11}, ..., R_{1O})$ |
| Experiment 2 | $(R_{21}, ..., R_{2O})$ |
| ... ... | |
| Experiment M | $(R_{M1}, ..., R_{MO})$ |

220 RoE data

| *Experiment 1* | $(R_{11}, ..., R_{1O})$ |
| **Experiment 1'** | $\mathbf{(R_{1'1}, ..., R_{1'O})}$ |
| Experiment 2 | $(R_{21}, ..., R_{2O})$ |
| **Experiment 2'** | $\mathbf{(R_{2'1}, ..., R_{2'O})}$ |
| ... ... | |
| Experiment M | $(R_{M1}, ..., R_{MO})$ |
| **Experiment M'** | $\mathbf{(R_{M'1}, ..., R_{M'O})}$ |

230 PoE data

Fig. 2

320 FACTORS

330 RESULTS

310 Experiment

Fig. 3

Fig. 4

410

415

418

417

412

404

431  432  420  470  480

Fig. 5

500

510 obtaining DoE data, wherein the DoE data is indicative of a set of buffer compositions and corresponding unique recipes, wherein the set of buffer compositions is selected as a subset from a total set of buffer compositions within a design range

520 running a first set of experiments by consecutively providing buffer compositions mixed according to each unique recipe indicated by the DoE data as the only input to the chromatography apparatus

530 obtaining RoE data as output from the chromatography apparatus, wherein the RoE data is indicative of at least a pH value and a conductivity value of each buffer composition of the set of buffer compositions

535 obtaining prediction of experimental, PoE data indicative of at least a predicted pH value and a predicted conductivity value of each buffer composition of the total set of buffer compositions.

540 obtaining an objective function, the objective function being dependent on a pH value and a conductivity value

550 selecting a second subset from the total set of buffer compositions which corresponding pH values and conductivity values optimize the objective function

560 determining the one or more buffer composition recipes for chromatography of a chemical sample as the unique recipes corresponding to the second subset from the total set of buffer compositions

570 performing chromatography of the chemical sample using at least one buffer composition mixed according to the one or more determined buffer composition recipes

Fig. 6

500

560 obtaining DoE data, wherein the DoE data is indicative of a set of buffer compositions and corresponding unique recipes, wherein the set of buffer compositions is selected as a subset from a total set of buffer compositions within a design range

561 running a second set of experiments by further consecutively providing the subset of buffer compositions and the chemical sample as input to the chromatography device

562 obtaining second results of experiment, RoE, data as output from the chromatography device, wherein the second RoE data is indicative of at least a measured purity and/or a measured yield of a wanted substance comprised in the sample

562b obtaining prediction of experimental or prediction of experiment, PoE, data indicative of a predicted purity and/or a predicted yield of a wanted substance comprised in the sample.

563 obtaining a second objective function, the second objective function being dependent on the measured purity and/or the measured yield

564 selecting a third subset from the second subset, which third subset optimizes the second objective function

565 determining the one or more buffer composition recipes for chromatography of a chemical sample as the unique recipes of the second subset

570 performing chromatography of the chemical sample using at least one buffer composition mixed according to the one or more determined buffer composition recipes

Fig. 7

240 Design range

```
┌─────────────────────────┐
│ 400                     │
│                         │
│    311 pH predictive    │
│        function         │
│                         │
│   312 Conductivity      │
│   predictive function   │
│                         │
└─────────────────────────┘
```

230 PoE data

Fig. 8

600 objective function

601 objective value

pH value

conductivity value

Buffer composition
Concentration
value

Fig. 9

**600 objective function**

pH value $\rightarrow$ **611 pH objective function**

Range pH: $[\text{pH}_{\text{desiredmin}}, \text{pH}_{\text{desiredmax}}]$

601 objective value

conductivity value $\rightarrow$ **611 Conductivity objective function**

Range Conductivity: $[\text{Conductivity}_{\text{desiredmin}}, \text{Conductivity}_{\text{desiredmax}}]$

Fig. 10

**REFERENCES CITED IN THE DESCRIPTION**

**Patent documents cited in the description**

- WO 2016075207 A1
- WO 2011037530 A1